# EUROPEAN PATENT APPLICATION

(11) **EP 4 071 351 A1**
(43) Date of publication of application: **12.10.2022**
(21) Application number: 21167640.8
(22) Date of filing: 09.04.2021
(51) Int. Cl.: F03D 7/02, F03D 7/04

(54) **WIND TURBINE TOWER DAMPING IN WIND PARK**

(71) Applicant: Siemens Gamesa Renewable Energy A/S, 7330 Brande (DK)
(72) Inventor: Alberts, Johannes Gerhardes Wardjan, 2660 Brøndby Strand (DK); Altun, Safak Burak, 2300 Copenhagen S (DK); Stoettrup, Michael, 7400 Herning (DK); Stoltze, Kenneth, 7000 Fredericia (DK); Tibaldi, Carlo, 2300 København (DK)
(74) Representative: SGRE-Association

(57) **Abstract**

The invention is related to a method for operating a plurality of wind turbines in a wind park, with the steps of: monitoring, via a central park controller of the wind park, active power frequency signal at an output of active power of the wind park, wherein the active power frequency behavior is affected by tower damping methods performed at at least a subset of the plurality of wind turbines; selecting a frequency information from the monitored active power frequency signal, preferably the frequency information being related to grid stability or substation capacity limits; comparing the selected frequency signal with a predefined threshold; and in case the threshold is met or exceeded, lowering the total active tower damping setpoint.

## Description

For damping wind turbine movements it is known that each individual wind turbine in a wind park has an active damping component introduced by the generator that damps the tower and foundation frequency by injecting torque and/or power which results in a reduced amplitude of the tower/foundation mode shapes and thereby lower the fatigue by roughly 10%.

On a park level, these damping components in the active power are most of the time out of sync as the phase, frequency and amplitude differs per turbine due to different foundation types, length of foundation (e.g. monopile), temperature and soil type and amount. Soil also can accumulate or wash away over time, changing the frequency. However sometimes these damping components in the active power will align and create a significant amplitude on electrical signals on the park level - i.e. electrical signals of the power output at the point of coupling of the wind partk to the grid -, potentially unwantedly exciting frequencies in the grid. These can be problematic as they can make the grid unstable, or overload electrical hardware on the substations.

So far such effects have been accepted by grid authorities as they typically understand the essence of these tower damping components. With more recent turbines, these active damping components in active power have been increased to optimize the foundation and tower design, making them less costly and achieve a better business case.

These considerations are improved by the following proposal.

It is proposed, at the park controller of the wind park, to monitor the total contribution of tower damping (so the sum of each turbine's active power damping component). If the frequency of interest, related to grid stability or substation capacity limits, has reached a certain threshold, then the total active tower damping component in power can be lowered, by lowering the tower damping on each individual turbine. This can be done by either lowering the gain used for active tower damping and/or by lowering the saturation of the active tower damping on each individual wind turbine.

This method guarantees a total power limit on the oscillations fed to the substation (usually the point of common coupling) or the grid.

In events where all tower damping contributions align, the individual tower damping procedures can temporarily be disabled (at one, several, or all turbines of the wind park), like grid fault ride through procedures or large/extensive changes to the power reference, etc.

## Claims

1. Method for operating a plurality of wind turbines in a wind park, with the steps of:
- monitoring, via a central park controller of the wind park, active power frequency signal at an output of active power of the wind park, wherein the active power frequency behavior is affected by tower damping methods performed at at least a subset of the plurality of wind turbines,
- selecting a frequency information from the monitored active power frequency signal, preferably the frequency information being related to grid stability or substation capacity limits;
- comparing the selected frequency signal with a predefined threshold;
- and in case the threshold is met or exceeded, lowering the total active tower damping setpoint.

2. Method according to claim 1,
**characterized in that**
the step of lowering the total active tower damping setpoint is performed by sending a signal to controllers of at least a subset of the plurality wind turbines for lowering the tower damping on the respective subset of the plurality wind turbines.

3. System comprising a wind park controller, in which the wind park controller performs the steps of the previous claims.
